(19) Europäisches Patentamt / European Patent Office / Office européen des brevets

(11) **EP 1 085 252 B1**

(12) **EUROPÄISCHE PATENTSCHRIFT**

(45) Veröffentlichungstag und Bekanntmachung des Hinweises auf die Patenterteilung:
**10.06.2015 Patentblatt 2015/24**

(21) Anmeldenummer: **00119631.0**

(22) Anmeldetag: **08.09.2000**

(51) Int Cl.:
*F21S 8/00* (2006.01)   *F21V 5/02* (2006.01)
*G02B 6/00* (2006.01)   *F21V 13/04* (2006.01)
*F21V 3/04* (2006.01)   *F21V 5/04* (2006.01)
*F21V 7/00* (2006.01)   *F21V 11/00* (2015.01)
*F21V 8/00* (2006.01)   *F21W 131/402* (2006.01)
*F21Y 105/00* (2006.01)

(54) **Lichtleiterleuchte mit verbesserter Abschirmung**

Light guide luminaire comprising improved shielding means

Luminaire à guide de lumière avec écran amélioré

(84) Benannte Vertragsstaaten:
**AT BE CH CY DE DK ES FI FR GB GR IE IT LI LU MC NL PT SE**

(30) Priorität: **17.09.1999 DE 19944743**
**20.12.1999 DE 19961494**

(43) Veröffentlichungstag der Anmeldung:
**21.03.2001 Patentblatt 2001/12**

(73) Patentinhaber: **Siteco Beleuchtungstechnik GmbH**
**83301 Traunreut (DE)**

(72) Erfinder:
• **Belloni, Paola, Dr.**
**83278 Traunstein (DE)**

• **Zou, Han**
**Windsor, NJ 08581 (US)**

(74) Vertreter: **Schohe, Stefan et al**
**Boehmert & Boehmert**
**Anwaltspartnerschaft mbB**
**Patentanwälte Rechtsanwälte**
**Pettenkoferstrasse 20-22**
**80336 München (DE)**

(56) Entgegenhaltungen:
**US-A- 5 467 417   US-A- 5 828 488**
**US-A- 5 851 062   US-A- 5 944 405**

EP 1 085 252 B1

**Beschreibung**

Diese Erfindung betrifft eine Leuchte, bei der in einen Lichtleiter von einer Lichtquelle über eine Lichteinkoppelseite Licht eingekoppelt wird und aus dem über eine Lichtaustrittsfläche Licht ausgekoppelt wird, wobei im Strahlengang des ausgekoppelten Lichts eine Prismenstruktur vorgesehen ist, welche eine Abschirmung in einer Ebene, beispielsweise einer C-Ebene gemäß DIN 5032-1, bewirkt, derart, daß die Leuchtdichte oberhalb eines bestimmten Winkels zu der Senkrechten unter einen vorgegebenen Grenzwert, z.B. unter 1000 cd/m$^2$, fällt.

Bei Leuchten mit einem Hohllichtleiter wird beispielsweise durch eine Struktur von linienförmigen Prismen mit einem dreieckigen Querschnitt in der Ebene senkrecht zu der Längsrichtung der Prismen eine Abschirmung erzeugt, wobei zwischen dem Abschirmwinkel C und dem Prismenwinkel w die folgenden Relationen erfüllt sind:

$$w/2 \leq C \qquad\qquad\qquad\qquad (1)$$

$$w \geq 2(2 \arcsin(1/n) + 90)/3 \qquad\qquad\qquad\qquad (2)$$

$$\tan(w/2) \leq (n \sin(\arcsin(1/n) - 3\ w/2) + \cos(w/2)) \,/\, (n \cos(\arcsin(1/n) - 3\ w/2)$$
$$+ \sin(w/2)) \qquad\qquad\qquad\qquad (3)$$

Aufgrund von Fresnel-Reflexionen an den lichtbrechenden Grenzflächen der Prismen kann jedoch ein Teil des Lichts nach mehreren inneren Reflexionen mit einem Winkel größer als dem Abschirmwinkel aus den Prismen austreten. Weiterhin kann auch wegen statistischer Streuungen, die durch die unvermeidbaren Oberflächendefekte und Materialdefekte bei einer Prismenstruktur entstehen, ein bestimmter Anteil des Lichts in einen Winkelbereich außerhalb des Abschirmwinkels austreten. Daher ist bei solchen Leuchten oberhalb des Abschirmwinkels die Leuchtdichte zwar stark reduziert, aber es ist immer noch eine gewisse nicht verschwindende Leuchtdichte gegeben.

US 5 828 488 betrifft einen Flachbildschirm mit einem refraktiven Polarisator. Über einen flachen Lichtleiter wird Licht flächig in einen Polarisationskörper eingekoppelt. Der Polarisationskörper transmittiert und reflektiert Teile des Lichts abhängig von der Polarisation des Lichts. Ferner ist einen lichtbrechende Struktur in dem Polarisator vorgesehen, um in ausgewählten Winkelbereichen Licht zu reflektieren oder zu transmittieren.

Eine weitere Hintergrundbeleuchtung für eine Flüssigkeitskristallanzeige ist in US 5 944 405 offenbart.

Es ist die Aufgabe der Erfindung, einen Weg anzugeben, wie die Abschirmung der eingangs genannten Leuchten derart verbessert werden kann, daß die Restleuchtdichte in dem Winkelbereich oberhalb des Abschirmwinkels verringert wird.

Erfindungsgemäß wird diese Aufgabe gelöst durch eine Leuchte nach Anspruch 1 mit einem Lichtleiter, in den von einer Lichtquelle Licht eingekoppelt wird und aus dem über eine Lichtauskoppelseite Licht zu einer Lichtaustrittsfläche der Leuchte ausgekoppelt wird, wobei in dem Lichtweg des aus dem Lichtleiter ausgekoppelten Lichts zumindest ein transparentes Abschirmelement mit einer lichtbrechenden Struktur, insbesondere einer Prismenstruktur, welche die Richtung des Lichts durch Lichtbrechung verändert und welche zumindest in einer Fläche senkrecht zu der Lichtaustrittsfläche eine Abschirmung bezüglich einer Senkrechten zu der Lichtaustrittsfläche bewirkt, und ein Strahloptimierungselement vorgesehen sind, welches Licht teilweise zurück in Richtung des Lichtleiters reflektiert und teilweise durchläßt, wobei der Anteil des an diesem Strahloptimierungselement zurückreflektierten Lichts für Licht, das auf seine Lichteintrittsfläche in einem ersten Winkelbereich bezüglich einer Normalen zu dieser Lichteintrittsfläche einfällt, wesentlich größer als derjenige Anteil ist, der bei einem Lichteinfall in einem anderen, zweiten Winkelbereich reflektiert wird, wobei der erste Winkelbereich so liegt, daß die Leuchtdichte des oberhalb des Abschirmwinkels austretenden Lichts der Leuchte durch die besagte Rückreflexion an dem Strahloptimierungselement stärker verringert ist als bei Licht, das bei Winkeln unterhalb des Abschirmwinkels austritt. Der erste Winkelbereich entspricht typischerweise großen Einfallswinkeln auf das Strahloptimierungselement, d.h. Einfallswinkeln von mehr als 70° oder mehr als 80°. Der zweite Winkelbereich entspricht typischerweise Einfallswinkeln im Bereich von 0°. Die vorangehend genannten Werte sind allerdings lediglich beispielhaft und können, je nach Form des Strahloptimierungselements, von den vorangehend genannten Werten verschieden sein.

Vorzugsweise weist das Strahloptimierungselement keine lichtbrechenden Strukturen auf, die eine Abschirmung in Flächen senkrecht zu der Lichtaustrittsfläche bewirken, in denen das Abschirmelement bzw. die Abschirmelemente im wesentlichen keine Abschirmung oder eine Abschirmung nur bei deutlich größeren Winkel bewirken.

Die Erfindung kann vorsehen, daß das Strahloptimierungselement eine glatte, nicht strukturierte Lichteintrittsfläche aufweist. Vorzugsweise ist seine Lichtaustrittsfläche ebenfalls glatt und nicht strukturiert. Beispielsweise kann eine Oberfläche des Strahloptimierungselements aber auch eine Struktur von rechteckigen Stufen mit einer Grundfläche parallel zu der gegenüberliegenden Seite aufweisen. Eine solche Struktur kann auch zur Dekoration oder zur mechanischen Verstärkung nützlich sein.

Gemäß einer besonderen Ausführungsform ist das Strahloptimierungselement eine planparallele Platte.

Gemäß einer weiteren Ausführungsform kann das Strahloptimierungselement auch aus mindestens zwei planparallelen Schichten bestehen, die voneinander durch eine Zwischenschicht getrennt sind, deren Brechungsindex geringer als derjenige des Materials dieser planparallelen Schichten ist. Beispielsweise kann diese Zwischenschicht ein Luftspalt sein.

In dem Strahlengang des aus der Leuchte austretenden Lichts können auch mehrere Strahloptimierungselemente nacheinander, insbesondere unmittelbar nacheinander, angeordnet sein.

Bevorzugt ist das Strahloptimierungselement unmittelbar benachbart zu einem Abschirmelement angeordnet. Vorzugsweise befinden sich zumindest teilweise ein Zwischenbereich bzw. Zwischenbereiche zwischen diesen beiden Elementen, in dem bzw. denen der Brechungsindex geringer als derjenige des Materials dieser Elemente ist. Beispielsweise kann sich ein Luftspalt oder eine Zwischenschicht aus einem geeigneten Material, z. B. einem geeignet gewählten Klebstoff, zwischen dem Abschirmelement und dem Strahloptimierungselement befinden. Diese Anordnung kommt insbesondere dann in Betracht, wenn das Strahloptimierungselement einer nicht strukturierten Fläche des Abschirmelements benachbart ist, in der Regel der Fläche, die auf der entgegengesetzten Seite zu der Seite mit der Prismenstruktur liegt. Das Abschirmelement und das Strahloptimierungselement können jedoch auch teilweise unmittelbar aneinander angrenzen, beispielsweise wenn das Strahloptimierungselement auf die Spitzen der Prismen des Abschirmelements aufgesetzt wird, wobei die besagten Zwischenbereiche dann in den Vertiefungen der Prismenstruktur bestehen, in deren Bereich die Oberfläche des Strahloptimierungselements von der Oberfläche des Abschirmelements beabstandet ist. Der Bereich dieser Vertiefungen ist in der Regel mit Luft gefüllt. Er kann jedoch auch mit einem anderen Material aufgefüllt sein, das einen geringeren Brechungsindex hat oder anderweitig so gestaltet sein, daß der Brechungsindex in diesem Bereich geringer ist.

Erfindungsgemäß kann beispielsweise vorgesehen sein, daß die die Abschirmung erzeugende Struktur, z.B. eine Prismenstruktur, in einer Folie ausgebildet ist, die auf das Strahloptimierungselement mit einem Klebstoff aufgeklebt ist, der einen geringeren Brechungsindex als die Folie und/oder das Strahloptimierungselement aufweist.

Eine besonders bevorzugte Ausführungsform der Erfindung sieht vor, daß das Strahloptimierungselement in der Richtung des Strahlengangs des aus der Lichtaustrittsfläche der Leuchte austretenden Lichts nach dem Abschirmelement angeordnet ist. Dabei entspricht der Winkelbereich mit einer erhöhten Reflexion an der Lichteintrittsfläche des Strahloptimierungselements ganz oder teilweise dem Winkelbereich oberhalb des Abschirmwinkels, d.h. das Licht, das oberhalb des Abschirmwinkels austritt, fällt zumindest teilweise auf das Strahloptimierungselement mit einem Winkel ein, für den der Reflexionskoeffizient gegenüber dem senkrechten Lichteinfall auf das Strahloptimierungselement erhöht ist.

Erfindungsgemäß können in dem Strahlengang des aus der Lichtaustrittsfläche austretenden Lichts mindestens zwei nacheinander vorgesehene lichtbrechende Strukturen, z.B. Prismenstrukturen, vorhanden sein, welche jeweils eine Abschirmung in unterschiedlichen Ebenen bewirken bzw. die Abschirmung einer oder mehrerer anderer Strukturen ergänzen.

Weiterhin kann auch ein Strahloptimierungselement in der Richtung des Strahlenganges des aus der Lichtaustrittsfläche austretenden Lichts nach der letzten eine Abschirmung erzeugenden Struktur angeordnet sein.

Die Erfindung kann auch vorsehen, daß ein Strahloptimierungselement zwischen zwei Abschirmelementen angeordnet ist.

Es kann auch vorgesehen sein, daß mehrere Strahloptimierungselemente in dem Strahlengang vorgesehen sind. In einer besonderen Ausführungsform ist jeder eine Abschirmung erzeugende Prismenstruktur ein derartiges Element zugeordnet. Gemäß einer alternativen Ausführungsform ist den Abschirmelementen insgesamt ein einziges Strahloptimierungselement zugeordnet, welches in Richtung des Strahlenganges des aus der Lichtaustrittsfläche austretenden Lichts nach allen Abschirmelementen angeordnet ist und die Anordnung nach außen vorzugsweise abschließt.

Als Materialien für das Strahloptimierungselement sind transparente, nicht bzw. gering streuende Materialien geeignet, insbesondere Glas, Polymethylmethacrylat, Polycarbonat oder Polyester.

Gemäß einer besonderen Ausführungsform ist der Anteil des an der Lichteintrittsfläche des Strahloptimierungselements reflektierten Lichts für Einfallswinkel des auf es einfallenden Lichts, die bei einer Transmission durch das Strahloptimierungselement zu einer Lichtabgabe bei Winkeln zu der Normalen zu der Lichtaustrittsfläche fuhren, die größer als der Abschirmwinkel sind, mindestens zweimal, vorzugsweise mindestens siebenmal, insbesondere mehr als zehnmal größer als bei einem Lichteinfall, der zu einem Lichtaustritt parallel zu dieser Normalen führt.

Insbesondere sind solche Strahloptimierungselemente geeignet, bei denen bei Einfallswinkeln an ihrer Lichteintrittsfläche oberhalb von 80° eine wesentlich stärkere Reflexion an der Lichteintrittsfläche stattfindet als bei 0°.

Es kann auch vorgesehen sein, daß das Strahloptimierungelement durch eine Trageinrichtung, beispielsweise einen Rahmen, an dem Gehäuse des Hohllichtleiters gehalten ist und an dem Strahloptimierungselement ein oder mehrere lichttechnische Komponenten, insbesondere ein oder mehrere Abschirmelemente, abgestützt sind. Beispielsweise kann eine Folie mit der die Abschirmung erzeugenden Struktur über dem Strahloptimierungselement eingelegt und ggf. am Rand eingespannt sein.

Gemäß einer besonderen Ausführungsform ist der Lichtleiter ein Hohllichtleiter. Die Erfindung kann allerdings auch bei einem Vollichtleiter angewendet werden.

Die Erfindung nutzt in vorteilhafter Weise den ansonsten unerwünschten Effekt aus, daß beispielsweise bei einer planparallelen Platte für große Winkel der Reflexionskoeffizient relativ hoch ist und der Transmissionskoeffizient, verglichen mit einem senkrechten Einfall, relativ gering ist. Auf diese Weise ist es möglich, das störende Licht, das in dem Abschirmbereich aufgrund von Fresnelreflexionen aus den Abschirmelementen austritt bzw. das bei einem Durchlauf durch ein nachfolgendes Prisma zu einer Lichtauskopplung im Abschirmbereich aufgrund von Fresnelreflexionen führen würde, teilweise auszublenden, während Licht, das nicht in den Abschirmbereich fällt, mit vergleichsweise geringen Verlusten durchgelassen wird. Auf diese Weise wird die Leuchtdichte in einem Bereich oberhalb des Abschirmwinkels stark verkleinert, während sie unterhalb des Abschirmwinkels nicht oder wesentlich weniger verringert wird.

Weitere Merkmale und Vorteile der Erfindung ergeben sich aus der nachfolgenden Beschreibung von Ausführungsbeispielen der Erfindung anhand der beigefügten Zeichnungen.

Fig. 1    zeigt ein Ausführungsbeispiel einer erfindungsgemäßen Leuchte in einer schematischen Querschnittsansicht.

Fig. 2    zeigt eine beispielhafte Prismenstruktur, die bei einer erfindungsgemäßen Leuchte verwendet werden kann.

Fig. 3    illustriert eine Fresnel-Reflexion,

Fig. 4    zeigt den Fresnel-Reflexionsgrad an der Grenzfläche zwischen Luft und Polymethylmethacrylat in Abhängigkeit von dem Einfallswinkel,

Fig. 5    zeigt die Leuchtdichte über dem Austrittswinkel für Leuchten mit und ohne die zusätzliche Kunststoffplatte,

Fig. 6    zeigt eine zweite beispielhafte Ausführungsform einer erfindungsgemäßen Leuchte in einem schematischen Querschnitt,

Fig. 7    zeigt eine dritte Ausführungsform einer erfindungsgemäßen Leuchte in einem schematischen Querschnitt und

Fig. 8    zeigt eine alternative Variante eines Strahloptimierungselements.

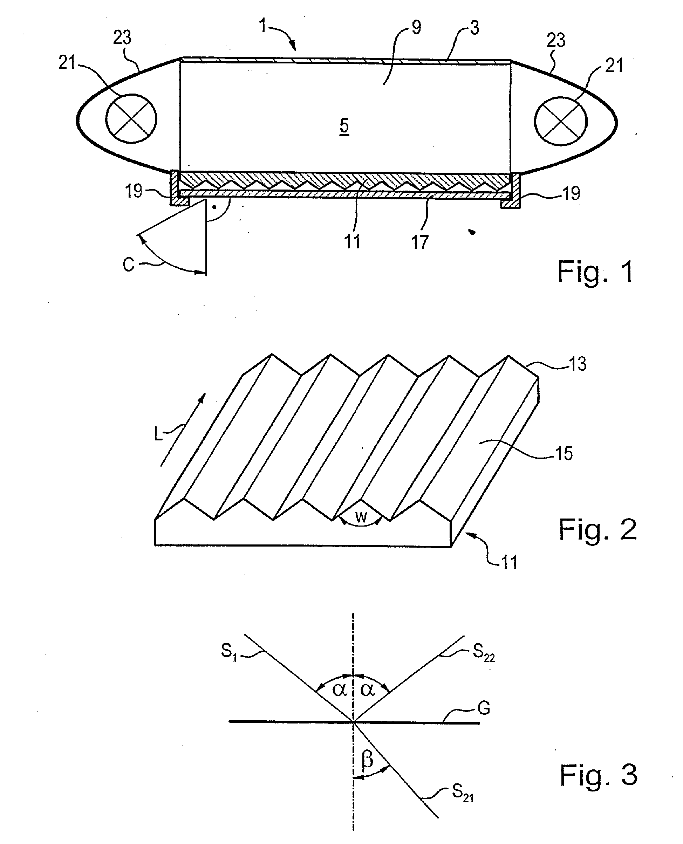

Die in Fig. 1 schematisch gezeigte Leuchte besteht aus einem Hohllichtleiter 1, der eine reflektierende Dachwand 3 sowie zwei einander gegenüberliegende reflektierende Seitenwände 5 und zwei seitlich offene Schmalseiten aufweist. Auf der der Dachwand 3 gegenüberliegenden Seite wird der Hohlraum 9 des Hohllichtleiters 1 durch eine Prismenplatte 11 aus einem lichtdurchlässigen klaren Material, wie Polymethylmethacrylat, Polycarbonat oder Polyester, begrenzt. Auf der von dem Hohlraum 9 abgewandten Seite ist die Prismenplatte 11 mit einer Prismenstruktur 13 aus länglichen Prismen 15 mit einem dreieckförmigen Querschnitt versehen, welche bei diesem Ausführungsbeispiel identisch ausgebildet sind und jeweils einen Prismenwinkel w aufweisen. Diese Prismen 15 bewirken aufgrund von Lichtbrechung eine Abschirmung in einer Ebene senkrecht zu der Längsrichtung L, wobei der Abschirmwinkel C zu dem Prismenwinkel w in der vorangehend in den Formeln (1) bis (3) angegebenen Beziehung steht. Die Prismen können für besondere Aufgaben auch jeweils unterschiedlich ausgebildet sein. In diesem Zusammenhang ist wichtig, daß sie insgesamt eine Verringerung der Leuchtdichte in einer Ebene senkrecht zu der Platte 11 oberhalb eines Abschirmwinkels bewirken.

Die Prismenplatte 11 wird auf der Unterseite durch eine planparallele klare, durchsichtige Kunststoffplatte 17 über die Spitzen der Prismen 15 abgestützt, die ihrerseits über geeignete Träger 19 an dem Gehäuse des Hohllichtleiters 1 gehalten wird. Die Kunststoffplatte 17 kann ebenfalls aus Polymethylmethacrylat, Polycarbonat oder Polyester bestehen.

An den beiden Schmalseiten des Hohllichtleiters 1 sind jeweils Lampen 21 angeordnet, welche Licht in den Hohlraum 9 einkoppeln. Den Lampen 21 sind geeignete Reflektoren 23 zugeordnet, welche das auf sie einfallende Licht im wesentlichen vollständig in den Hohlraum 9 reflektieren und hierfür ggf. in geeigneter, bekannter Weise, z.B. in einer Evolventenform, ausgebildet sein können.

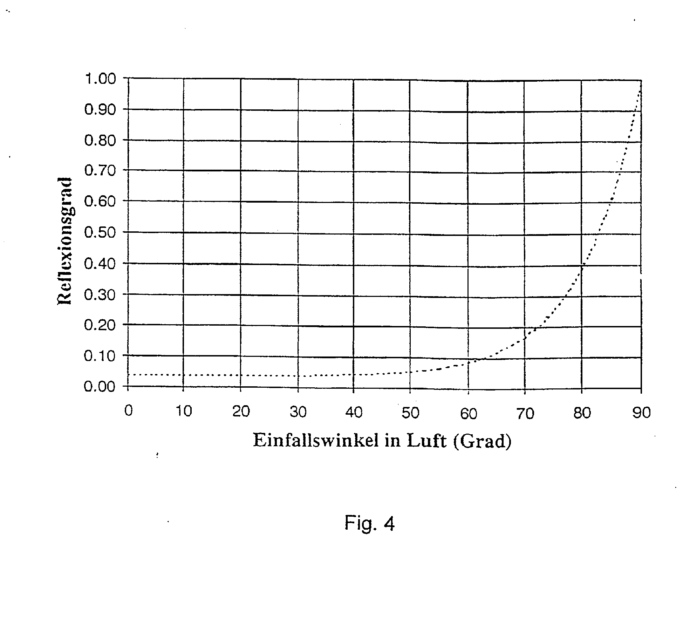

Das von den Lampen 21 in den Hohlraum 9 eingekoppelte Licht wird selektiv durch die Prismenplatte 11 ausgekoppelt. Wenn das in die Platte 11 aus dem Hohlraum 9 eintretende Licht auf eine Grenzfläche der Prismen mit einem Winkel kleiner als dem Winkel der Totalreflexion einfällt, wird es durch Lichtbrechung ausgekoppelt. Wäre die Lichtauskopplung vollständig (100 % Transmission), wäre die Abschirmung vollkommen. Tatsächlich geht jedoch für Winkel größer als C die Leuchtdichte nicht vollständig auf 0. Dies liegt daran, daß bei jeder Lichtbrechung ein gewisser Anteil des Lichts reflektiert wird (Fresnel-Reflexion), was schematisch in Fig. 3 dargestellt ist. Ein Lichtstrahl $S_1$, der mit einem Winkel $\alpha$ auf die Grenzfläche G zu einem optisch verschiedenen Medium einfällt, wird einerseits gebrochen und tritt mit einem Winkel $\beta$ in das andere Medium ein, was schematisch durch den Strahl $S_{21}$ angedeutet ist. Ein gewisser Teil des Lichts wird jedoch mit dem Winkel $\alpha$ zurückreflektiert, was durch den Strahl $S_{22}$ angedeutet ist. An einer Grenzfläche der Prismen tritt also nicht nur der erwünschte Strahl $S_{21}$ aus, dessen Austrittswinkel $\beta$ kleiner als der Abschirmwinkel ist, sondern es wird auch Licht in Form des Strahls $S_{22}$ zurückreflektiert, wo es nach mehreren Reflexionen aus dem Prisma mit einem Lichtaustrittswinkel austreten kann, der größer als der Abschirmwinkel C ist. Es sind diese Lichtanteile, die dafür verantwortlich sind, daß die Leuchtdichte oberhalb des Abschirmwinkels C nicht vollständig auf 0 zurückgeht. Der Fresnel-Reflexionsgrad an einer Grenzfläche zwischen Luft und Polymethylmethacrylat ist als Beispiel in Fig. 4 dargestellt. Man erkennt, daß der Reflexionsgrad für Einfallswinkel unterhalb von 60° relativ gering ist und oberhalb von 60° rasch ansteigt.

Erfindungsgemäß wird nun gerade das an sich unerwünschte Phänomen der Fresnel-Reflexion ausgenutzt, um die Leuchtdichte zumindest für Winkel oberhalb des Abschirmwinkels C zu verringern. Dabei wird ausgenutzt, daß der Anteil des an einer Grenzfläche reflektierten Lichts bei großen Einfallswinkeln wesentlich größer sein kann als bei kleinen Einfallswinkeln. Beispielsweise wird, wie Fig. 4 zeigt, bei einer Grenzfläche Luft/Polymethylmethacrylat bei einem Einfallswinkel von mehr als 80° etwa 40 % des einfallenden Lichts reflektiert, während bei einem Einfallswinkel von 0° nur etwa 4 % oder weniger reflektiert werden. Bezug nehmend auf das Diagramm der Fig. 3 bedeutet dies, daß der Lichtanteil, welcher dem Strahl $S_{22}$ entspricht, bei großen Einfallswinkeln $\alpha$ wesentlich größer ist als bei kleinen Winkeln. Betrachtet man nun die der Prismenplatte 11 zugewandte Grenzfläche der planparallelen Platte 17, so gilt das Diagramm der Fig. 3 entsprechend für diese Grenzfläche. Der Winkel des aus der Prismenplatte 11 austretenden Lichts bezüglich einer Senkrechten zu der Prismenplatte ist gleich dem Einfallswinkel an dieser Grenzfläche und es ist unmittelbar klar, daß für große Einfallswinkel $\alpha$ die Leuchtdichte des aus der Platte 17 austretenden Strahls $S_{21}$ wesentlich kleiner als bei kleinen Winkeln $\alpha$ ist. Da die Winkel oberhalb des Abschirmwinkels zumindest teilweise solchen großen Einfallswinkeln entsprechen, wird zumindest für einen Teil der Winkel, die größer als der Abschirmwinkel sind, ein größerer Teil des Lichts an der Grenzfläche zurückreflektiert und damit ausgeblendet. Tritt beispielsweise ein Lichtstrahl $S_1$ mit einem Winkel größer als dem Abschirmwinkel aus der Prismenstruktur aus, so fällt er unter dem gleichen Winkel auf die Platte 17 ein und wird, wenn dieser Winkel beispielsweise im Bereich von etwa 80° liegt, zu 40 % zu der Prismenstruktur zurückreflektiert. Optimalerweise erfolgen dort weitere Reflexionen mit dem Resultat, daß dieses zurückreflektierte Licht nicht mehr zu der Platte 17 zurückkehrt. Das zurückreflektierte Licht wird dadurch gewissermaßen ausgeblendet. Aber auch dann, wenn ein Teil des zurückreflektierten Lichts durch die Prismenstruktur zu der Platte 17 reflektiert wird, ist dieser Teil durch Absorption und mehrfache Reflexionen bereits geschwächt und wird beim Einfall auf die Grenzfläche der Platte 17, sofern er nicht mit einem Winkel kleiner als dem Abschirmwinkel einfällt, wie vorangehend beschrieben, durch erneute Reflexion an der Grenzfläche wieder reduziert. Auf diese Weise verringert sich die Leuchtdichte zumindest für bestimmte Winkel größer als dem Winkel C erheblich. Wenn andererseits das Licht aus der Prismenplatte 11 mit einem Winkel kleiner als dem Abschirmwinkel C austritt und auf die Platte 17 einfällt, wird es, da der zugehörige Reflexionskoeffizient wesentlich kleiner ist als bei Winkeln größer als C ist, zum überwiegenden Teil als Lichtstrahl $S_{21}$ ohne größere Verluste ausgekoppelt.

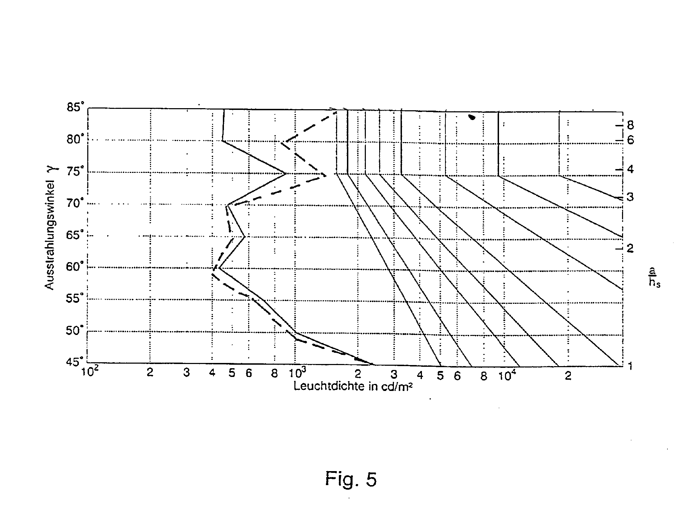

Fig. 5 zeigt eine logarithmische Darstellung der Leuchtdichte über dem Ausstrahlungswinkel, wobei die durchgezogene Linie für eine Leuchte mit der Platte 17 steht und die unterbrochene Linie für eine Leuchte ohne die Platte 17. Man erkennt zunächst, daß in beiden Fällen bis zu einem Winkel von 60° die Leuchtdichte abfällt und danach wieder geringfügig ansteigt. Oberhalb von 70° steigt die Leuchtdichte für eine Leuchte ohne die Platte 17 jedoch wieder wesentlich stärker an, während die Leuchtdichte bei einer Leuchte mit der Platte 17 geringer bleibt und für Winkel oberhalb von 80° weniger als das Doppelte und bei einem Winkel von 85° weniger als das Vierfache beträgt.

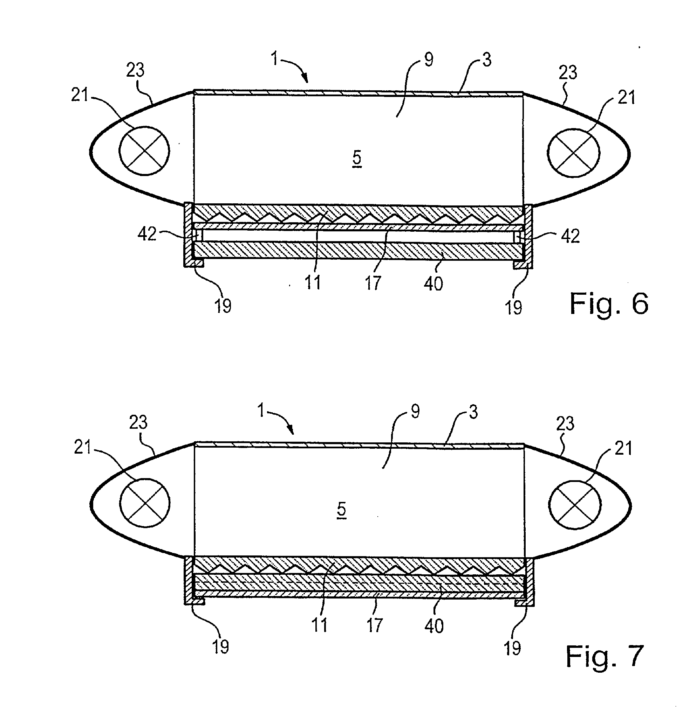

Fig. 6 zeigt eine Ausführungsform einer erfindungsgemäßen Leuchte, bei welcher zusätzlich zu der Prismenplatte 11 eine zweite Prismenplatte 40 vorgesehen ist, wobei die planparallele Platte 17 zwischen diesen beiden Platten angeordnet ist. Die Platte 40 ist bei diesem Ausführungsbeispiel wie in Fig. 2 dargestellt aufgebaut, wobei allerdings die Längsrichtung L ihrer Prismen senkrecht zu der Längsrichtung der Prismen der Platte 11 ist. Diese Anordnung bewirkt eine Abschirmung in zwei zueinander senkrechten Ebenen, die jeweils senkrecht zu der Längsrichtung der Prismen einer der Prismenplatten 11 bzw. 40 stehen. Zwischen der planparallelen Platte 17 und der Prismenplatte 40 sind Abstandhalter 42 vorgesehen, welche zwischen diesen beiden Platten einen Luftspalt erzeugen. Die Platten 11, 17 und 40 werden wieder durch Träger 19 an dem Hohllichtleiter 1 gehalten.

Bei der Ausführungsform gemäß Fig. 7 liegt die Prismenplatte 40 mit ihrer unstrukturierten Seite unmittelbar an den Prismen 15 der Platte 11 an und die planparallele Platte 17 liegt ihrerseits wiederum direkt an den Prismen der Prismenplatte 40 an. Die Prismen der Platte 11 liegen wieder senkrecht zu denjenigen der Platte 40. Es hat sich gezeigt, daß mit dieser Ausführungsform die besten Ergebnisse hinsichtlich der Verringerung der Leuchtdichte in dem Winkelbereich oberhalb des Abschirmwinkels in den beiden Ebenen senkrecht zu der Längsrichtung der Prismen erzielt werden.

Die Ausführungsform gemäß Fig. 7 hat den weiteren Vorteil, daß die planparallele Platte 17 die Prismenplatten 11 und 40 nach außen abschließt und somit vor Verschmutzung und Beschädigung schützt. Weiterhin stützt bei dieser Ausführungsform die planparallele Platte 17 die Prismenplatten 11 und 40 über die. Träger 19 ab. Während bei der Ausführungsform gemäß Fig. 6 die Prismenplatte 40 eine ausreichende Eigensteifigkeit besitzen muß, um eine Verformung bzw. ein Verbiegen zu verhindern, ist eine solche Eigensteifigkeit für die Prismenplatten bei der Ausführungsform gemäß Fig. 7 nicht erforderlich, was eine größere Freiheit bei der Wahl der Prismenmaterialien ergibt. Beispielsweise könnten die Platten 11 und 40 aus biegbaren Prismenfolien bestehen, welche auf die Platte 17 aufgelegt oder aufgeklebt werden.

Die vorangehend dargestellten Ausführungsformen sind lediglich beispielhaft, insbesondere hinsichtlich der Lage der Platte 17 oder der Form der verwendeten Prismen. Statt der dargestellten dreieckförmigen Prismen können auch andere Prismenformen verwendet werden, insbesondere auch Prismen, die auf der Grundfläche gegenüberliegender Seiten keine scharfen Spitzen aufweisen, wie Prismen mit dreieckigem Querschnitt, sondern abgeflacht sind. Statt linienförmiger Prismen können beispielsweise auch pyramidenstumpfförmige Prismen verwendet werden. Die Form des Hohllichtleiters kann von der in den Figuren 1, 6 oder 7 dargestellten Form abweichen. Die Prismen der Platten 11 und 40 müssen nicht notwendig in die Richtung des Lichtaustritts weisen, sondern können bei einer oder beiden Platten auch in die entgegengesetzte Richtung weisen.

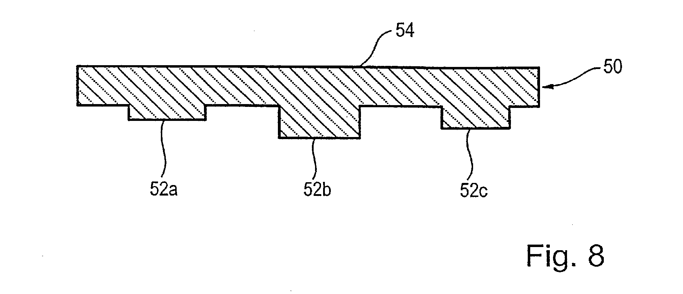

Die Platte 17 muß nicht notwendigerweise planparallel mit zwei einander gegenüberliegenden glatten Oberflächen ausgebildet sein. Beispielsweise kann eine Platte 50 wie in Fig. 8 dargestellt als Strahloptimierungselement verwendet werden. Diese Platte weist an einer ihrer Oberflächen rechteckige Stufen 52a, 52b und 52c unterschiedlicher Höhe auf, deren Grundfläche parallel zu der gegenüberliegenden Fläche 54 ist. Grundsätzlich kann auch die Fläche 54 in ähnlicher Weise strukturiert sein. Eine Struktur wie in Fig. 8 gezeigt bewirkt im wesentlichen keine Änderung der Richtung des auf sie einfallenden Lichts in der Transmission.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

Bezugszeichenliste

| 1 | Hohllichtleiter |
| 3 | Dachwand |
| 5 | Seitenwände |
| 9 | Hohlraum |
| 11 | Prismenplatte |
| 13 | Prismenstruktur |
| 15 | Prismen |
| 17 | planparallele Platte |
| 19 | Träger |
| 21 | Lampe |
| 23 | Reflektor |
| 40 | Prismenplatte |
| 42 | Abstandhalter |
| 50 | planparallele Platte |
| 52a, 52b, 52c | Stufen |
| 54 | Außenseite der Platte |
| C | Abschirmwinkel |
| G | Grenzfläche |
| L | Längsachse der Prismen |
| w | Prismenwinkel |

**Patentansprüche**

1. Leuchte mit einem Lichtleiter (1), in den von einer Lichtquelle (21) Licht eingekoppelt wird und aus dem über eine Lichtauskoppelseite Licht zu einer Lichtaustrittsfläche der_Leuchte ausgekoppelt wird, wobei in dem Lichtweg des aus dem Lichtleiter ausgekoppelten Lichts zumindest ein transparentes Abschirmelement (11) mit einer lichtbrechenden Struktur (13), welche zumindest in einer Fläche senkrecht zu der Lichtaustrittsfläche eine Abschirmung bezüglich einer Senkrechten zu der Lichtaustrittsfläche bewirkt, und ein Strahloptimierungselement (17) vorgesehen sind, welches Licht teilweise zurück in Richtung des Lichtleiters (1) reflektiert und teilweise durchläßt, **dadurch gekennzeichnet, daß** der Anteil des an diesem Strahloptimierungselement (17) reflektierten Lichts für Licht, das auf die Lichteintrittsfläche dieses Strahloptimierungselements in einem ersten Winkelbereich bezüglich einer Normalen zu dieser Lichteintrittsfläche einfällt, größer als derjenige Anteil ist, der bei einem Lichteinfall in einem anderen, zweiten Winkelbereich reflektiert wird, wobei der erste Winkelbereich Einfallswinkeln von mehr als 70° entspricht, so daß die Leuchtdichte des oberhalb des Abschirmwinkels austretenden Lichts der Leuchte durch die besagte Rückreflexion an dem Strahloptimierungselement (17) verringert ist, wobei das Strahloptimierungselement keine lichtbrechenden Strukturen aufweist, die eine Abschirmung in Flächen senkrecht zu der Lichtaustrittsfläche bewirken, in denen das Abschirmelement (11) bzw. die Abschirmelemente (11, 40) im wesentlichen keine Abschirmung oder eine Abschirmung nur bei größeren Winkeln bewirken.
(Es folgen die Ansprüche 2 bis 10 wie ursprünglich eingereicht)

2. Leuchte nach Anspruch 1, **dadurch gekennzeichnet, daß** das Strahloptimierungselement (17) in der Richtung des Strahlengangs des aus der Lichtaustrittsfläche austretenden Lichts nach dem Abschirmelement (11) angeordnet ist.

3. Leuchte nach einem der Ansprüche 1 oder 2, **dadurch gekennzeichnet, daß** in dem Strahlengang des aus der Lichtaustrittsfläche austretenden Lichts mindestens zwei nacheinander vorgesehene lichtbrechende, eine Abschirmung erzeugende Strukturen (11, 40) vorhanden sind, wobei jede dieser Strukturen die Abschirmung einer anderen Struktur ergänzt.

4. Leuchte nach einem der Ansprüche 1 bis 3, **dadurch gekennzeichnet, daß** ein Strahloptimierungselement (17) in der Richtung des Strahlenganges des aus der Lichtaustrittsfläche austretenden Lichts nach der letzten eine Abschirmung erzeugenden Struktur (40) angeordnet ist.

5. Leuchte nach einem der Ansprüche 1 bis 4, **dadurch gekennzeichnet, daß** ein Strahloptimierungselement zwischen zwei Abschirmelementen (11, 40) angeordnet ist.

6. Leuchte nach einem der Ansprüche 1 bis 5, **dadurch gekennzeichnet, daß** der Anteil des an der Lichteintrittsfläche des Strahloptimierungselements (17) reflektierten Lichts für Einfallswinkel ($\alpha$) des auf es einfallenden Lichts, die bei einer Transmission durch das Strahloptimierungselement (17) zu einer Lichtabgabe der Leuchte bei Winkeln zu der Normalen zu der Lichtaustrittsfläche fuhren, die größer als der Abschirmwinkel (C) sind, mindestens zweimal größer als bei einem Lichteinfall in einem Winkelbereich ist, der zu einem Lichtaustritt parallel zu dieser Normalen führt.

7. Leuchte nach einem der Ansprüche 1 bis 6, **dadurch gekennzeichnet, daß** das Strahloptimierungselement (17) durch eine Trageinrichtung (19) an dem Gehäuse des Hohllichtleiters gehalten ist und an dem Strahloptimierungselement (17) ein oder mehrere lichttechnische Komponenten (11, 40) abgestützt sind.

8. Leuchte nach einem der Ansprüche 1 bis 7, **dadurch gekennzeichnet, daß** der Lichtleiter ein Hohllichtleiter (1) ist.

9. Leuchte nach einem der Ansprüche 1 bis 8, **dadurch gekennzeichnet, daß** das Strahloptimierungselement (17) eine planparallele Platte ist.

10. Leuchte nach Anspruch 9, **dadurch gekennzeichnet, daß** die planparallele Platte aus mindestens zwei planparallelen Schichten besteht, die voneinander durch eine Zwischenschicht getrennt sind, deren Brechungsindex geringer als derjenige des Materials der planparallelen Schichten ist.

**Claims**

1. Light fitting with a light conductor (1), in which light from a light source (21) is coupled and from which light is decoupled by means of a light decoupling side to a light output surface of the light fitting, wherein, provided in the light path of the light decoupled out of the light conductor are at least one transparent screening element (11) with a refractive structure (13) which at least in an area perpendicular to the light output surface effects a screening relative to a perpendicular line to the light output surface, and a beam optimisation element (17), which reflects light partially back in the direction of the light conductor (1) and partially lets it through, **characterised in that** the part of the light reflected on this beam optimisation element (17) for light which strikes the light input surface of this beam optimisation element in a first angle range relative to a normal to this light input surface, is greater than the part which is reflected where light strikes in another second angle range, wherein the first angle range corresponds to angles of incidence of more than 70°, so that the light density of the light emerging from the light fitting above the screening angle is reduced by the aforesaid back reflection on the beam optimisation element (17), wherein the beam optimisation element does not have any refractive structures which effect a screening in areas perpendicular to the light output surface, in which the screening element (11) or the screening elements (11, 40) do not substantially effect any screening or only effect a screening at larger angles.

(Below are the claims 2 to 10 as originally submitted).

2. Light fitting according to claim 1, **characterised in that** the beam optimisation element (17) is arranged after the screening element (11) in the direction of the path of the beam of light emerging from the light output surface.

3. Light fitting according to one of the claims 1 or 2, **characterised in that** in the path of the beam of light emerging from the light output surface, there are at least two refractive structures (11, 40) arranged one after the other and creating a screen, wherein each of these structures completes the screening of another structure.

4. Light fitting according to one of the claims 1 to 3, **characterised in that** a beam optimisation element (17) is arranged after the last structure (40) generating a screen in the direction of the path of the beam of light emerging from the light output surface.

5. Light fitting according to one of the claims 1 to 4, **characterised in that** a beam optimisation element is arranged between two screening elements (11, 40).

6. Light fitting according to one of the claims 1 to 5, **characterised in that** the part of the light reflected on the light input surface of the beam optimisation element (17) for angles of incidence (a) of the light striking it, which in a transmission through the beam optimisation element (17) lead to a light emission from the light fitting at angles to the normal to the light output surface which are greater than the screening angle (C), is at least twice as big as where a light strikes in an angle range which leads to a light output parallel to this normal.

7. Light fitting according to one of the claims 1 to 6, **characterised in that** the beam optimisation element (17) is held by a carrier device (19) on the housing of the hollow light conductor and one or more light-technical components (11, 40) are supported on the beam optimisation element (17).

8. Light fitting according to one of the claims 1 to 7, **characterised in that** the light conductor is a hollow light conductor (1).

9. Light fitting according to one of the claims 1 to 8, **characterised in that** the beam optimisation element (17) is a plane parallel plate.

10. Light fitting according to claim 9, **characterised in that** the plane parallel plate consists of at least two plane parallel layers which are separated from each other by an intermediate layer, the refraction index of which is lower than that of the material of the plane parallel layers.

**Revendications**

1. Luminaire, comportant un guide de lumière (1), dans lequel est injectée la lumière provenant d'une source lumineuse (21) et à partir duquel la lumière est envoyée via un côté de sortie de la lumière vers une surface de sortie de la lumière du luminaire, dans le trajet de la lumière envoyée hors du guide de lumière sont prévus au moins un élément formant écran (11) transparent avec une structure réfractrice (13), qui induit au moins dans une surface perpendiculaire à la surface de sortie de la lumière une protection d'écran par rapport à une verticale à la surface de sortie de la lumière, et un élément d'optimisation du faisceau (17), qui rétroréfléchit une partie de la lumière vers le guide de lumière (1) et laisse passer une partie de la lumière, **caractérisé en ce que** la part de la lumière réfléchie sur ledit élément d'optimisation du faisceau (17) pour la lumière qui parvient sur la surface d'entrée de la lumière dudit élément d'optimisation du faisceau dans une première zone angulaire par rapport à une normale à ladite surface d'entrée de la lumière, est supérieure à la part qui, en présence d'une incidence de la lumière, est réfléchie dans une autre deuxième zone angulaire, la première zone angulaire correspondant à des angles d'incidence supérieurs à 70°, de telle sorte que la luminance de la lumière du luminaire, sortant au-dessus de l'angle d'écran, est diminuée par ladite rétroréflexion sur l'élément d'optimisation du faisceau (17), ledit élément d'optimisation du faisceau (17) ne comportant pas de structures réfractrices qui induisent une protection d'écran dans des surfaces perpendiculaires à la surface de sortie de la lumière, dans lesquelles l'élément formant écran (11) ou les éléments formant écran (11, 40) n'induisent sensiblement aucune protection d'écran ou seulement une protection d'écran en présence d'angles plus grands.

2.  Luminaire selon la revendication 1, **caractérisé en ce que** l'élément d'optimisation du faisceau (17) est disposé en aval de l'élément formant écran (11) dans la direction de la trajectoire du faisceau de lumière sortant de la surface de sortie de la lumière.

3.  Luminaire selon la revendication 1 ou 2, **caractérisé en ce que** dans la trajectoire du faisceau de lumière sortant de la surface de sortie de la lumière sont disposées au moins deux structures (11, 40) réfractrices, prévues l'une derrière l'autre, générant une protection d'écran, chacune de ces structures complétant la protection d'écran de l'autre structure.

4.  Luminaire selon l'une quelconque des revendications 1 à 3, **caractérisé en ce que**, dans la direction de la trajectoire du faisceau de lumière sortant de la surface de sortie de la lumière, un élément d'optimisation du faisceau (17) est disposé en aval de la dernière structure (40) générant une protection d'écran.

5.  Luminaire selon l'une quelconque des revendications 1 à 4, **caractérisé en ce qu'**un élément d'optimisation du faisceau est disposé entre deux éléments formant écran (11, 40).

6.  Luminaire selon l'une quelconque des revendications 1 à 5, **caractérisé en ce que** la part de lumière réfléchie sur la surface d'entrée de la lumière de l'élément d'optimisation du faisceau (17), pour des angles d'incidence ($\alpha$) de la lumière parvenant sur ledit élément, qui, au moment d'une transmission à travers l'élément d'optimisation du faisceau (17), entraînent une émission de lumière du luminaire avec des angles formés par rapport à la normale par rapport à la surface de sortie de la lumière, lesquels sont supérieurs à l'angle d'écran (C), au moins deux fois plus grands qu'en cas d'une incidence de la lumière dans une zone angulaire qui entraîne une sortie de lumière parallèle à cette normale.

7.  Luminaire selon l'une quelconque des revendications 1 à 6, **caractérisé en ce que** l'élément d'optimisation du faisceau (17) est fixé au boîtier du guide de lumière creux par un dispositif de support (19), et un ou plusieurs composants (11, 40) de la technique d'éclairage sont mis en appui contre l'élément d'optimisation du faisceau (17).

8.  Luminaire selon l'une quelconque des revendications 1 à 7, **caractérisé en ce que** le guide de lumière est un guide de lumière creux (1).

9.  Luminaire selon l'une quelconque des revendications 1 à 8, **caractérisé en ce que** l'élément d'optimisation du faisceau (17) est une plaque plane et parallèle.

10. Luminaire selon la revendication 9, **caractérisé en ce que** la plaque plane et parallèle est constituée d'au moins deux couches planes et parallèles qui sont séparées l'une de l'autre par une couche intermédiaire, dont l'indice de réfraction est inférieur à celui du matériau des couches planes et parallèles.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5828488 A
- US 5944405 A